# FASCICULE DE BREVET EUROPEEN

(11) **EP 3 986 810 B1**
(45) Date de publication et mention de la délivrance du brevet: **17.05.2023**
(21) Numéro de dépôt: 20735098.4
(22) Date de dépôt: 19.06.2020
(51) Int. Cl.: B65G 17/24, B65G 47/24, B65G 47/244

(54) **PROCÉDÉ ET SYSTÈME DE CONVOYAGE DE FRUITS ET LÉGUMES À PÉDONCULE ORIENTÉ**
VERFAHREN UND VORRICHTUNG ZUM FÖRDERN VON OBST UND GEMÜSE MIT EINEM AUSGERICHTETEN STENGEL
PROCESS AND SYSTEM FOR CONVEYING FRUIT AND VEGETABLES WITH AN ORIENTED STALK

(30) Priorité: 19.06.2019 FR 1906611
(43) Date de publication de la demande: 27.04.2022
(73) Titulaire: MAF Agrobotic, 82000 Montauban (FR)
(72) Inventeur: BLANC, Philippe, 82000 MONTAUBAN (FR)
(74) Mandataire: BARRE LAFORGUE
(86) Numéro de dépôt international: PCT/EP2020/067122
(87) Numéro de publication internationale: WO 2020/254589

(56) Documents cités:
- WO-A1-2017/187076
- JP-A- H09 215 963
- JP-A- H09 278 158
- JP-A- H11 116 037
- US-A- 3 945 489
- US-A- 4 981 205
- US-A- 5 078 258
- US-B1- 6 691 854
- US-B2- 9 375 760

## Description

La présente invention concerne un procédé et un système de convoyage de fruits et légumes à pédoncule permettant d'orienter leur pédoncule de manière prédéterminée.

Le pédoncule d'un fruit ou d'un légume est la tige qui supporte le fruit ou le légume. Le terme de queue est également utilisé dans le langage courant, par exemple pour les cerises.

On connait (JPH11116037A, US6691854) des procédés et dispositifs d'orientation d'un fruit ombiliqué en vue de leur présentation. On connait aussi de WO2017/187076 un procédé et un dispositif d'orientation d'un fruit pédonculé en vue de son emballage dans lequel est réalisée successivement une rotation du fruit pédonculé selon un axe de rotation horizontal, puis une rotation du fruit pédonculé selon un axe de rotation vertical permettant d'amener le pédoncule dans une position prédéterminée en vue de l'emballage du fruit. JPH11116037A décrit le préambule des revendications 1 et 6.

On connaît aussi des systèmes de convoyage de fruits et légumes à pédoncule dans lesquels les fruits ou légumes, appelés objets, sont transportés sur une ligne de convoyage où un tri est effectué. Il peut s'agir par exemple d'un calibrage ou d'un tri, notamment en fonction de la coloration des objets.

Les objets sont portés chacun par des supports qui sont mis en mouvement par un élément longitudinal de transport tel qu'une chaîne entrainant lesdits objets suivant une direction d'avancement longitudinale. Chaque support est typiquement formé de deux bi-cônes placés l'un derrière l'autre dans le sens d'avancement de la chaîne et entre lesquels repose un objet. Les bi-cônes sont entraînés en rotation sur eux-mêmes de manière à provoquer la rotation de l'objet qu'ils transportent autour d'un axe transversal horizontal afin qu'un système tel qu'un système d'imagerie puisse inspecter la surface de l'objet.

Toutefois, l'inventeur s'est aperçu que la présence des pédoncules sur les objets constitue une gêne lors de la mise en rotation desdits objets, ce qui ne permet pas d'orienter les objets comme on le souhaiterait. En particulier, il n'est pas possible d'orienter les objets de manière à ce que la partie de ces objets qui est opposée à celle portant le pédoncule soit orientée vers un côté de la ligne de convoyage où peut être agencé un système d'imagerie ou de tri des objets. Ainsi, le tri ne peut pas être effectué sur la totalité de la surface extérieure de l'objet, en particulier sur la totalité de la surface extérieure de l'objet en rotation.

L'invention prévoit de remédier au moins en partie à cet inconvénient en proposant un procédé de transport d'objets appartenant au groupe des fruits et légumes à pédoncule, caractérisé en ce qu'il comporte les étapes de la revendication 1.

Cette mise en rotation dudit au moins un support permet d'orienter géométriquement le pédoncule de l'objet suivant une direction globale souhaitée parmi plusieurs directions globales possibles. En effet, l'orientation ou la position géométrique prédéterminée du pédoncule dans l'espace est généralement définie de manière globale, c'est-à-dire qu'elle s'inscrit dans un secteur géométrique angulaire en trois dimensions qui est appelé angle solide (cône en trois dimensions). En raison de différents paramètres d'exploitation de la ligne de convoyage et des objets eux-mêmes, il n'est pas possible de conférer une orientation géométrique prédéterminée plus précise et ainsi d'être certain qu'en fin de rotation le pédoncule sera orienté avec un angle précis par exemple par rapport à l'horizontale, à la verticale ou à la direction générale de la ligne de convoyage. Ainsi, l'orientation géométrique prédéterminée qui est conférée au pédoncule par cette mise en rotation dudit au moins un support doit être comprise comme étant globalement inscrite dans un angle solide qui est orienté vers l'un ou l'autre des deux côtés opposés qui flanquent la ligne de convoyage (orientation « latérale » du pédoncule). Que l'on se place dans un plan vertical agencé transversalement par rapport à la direction générale de la ligne de convoyage ou dans un plan horizontal incluant la direction générale de la ligne de convoyage le pédoncule est orienté à l'intérieur d'un cône. Ainsi, dans un tel plan vertical le pédoncule peut être orienté vers le haut, vers le bas ou horizontalement. De même, dans un tel plan horizontal le pédoncule peut être orienté vers l'avant, vers l'arrière ou perpendiculairement à la direction générale de la ligne de convoyage. Cette orientation « latérale » du pédoncule permet d'orienter la partie de l'objet qui est opposée à celle portant le pédoncule en regard d'un système, tel qu'un système d'imagerie.

L'étape de mise en rotation d'au moins un support est une étape de mise en rotation et de maintien en rotation d'au moins un support d'un objet lors du déplacement longitudinal du support entrainé par la ligne de convoyage dans son mouvement d'avancement longitudinal, de manière à provoquer la rotation dudit objet autour d'un axe non horizontal, à maintenir la rotation dudit objet autour de cet axe non horizontal lors du déplacement longitudinal du support et à conférer à son pédoncule une orientation géométrique prédéterminée et à maintenir cette orientation géométrique prédéterminée lors du déplacement longitudinal du support. Avantageusement, cette mise en rotation régulière -c'est-à-dire sensiblement non perturbée par la présence du pédoncule- dudit objet dont le pédoncule présente, au cours de la rotation maintenue dudit objet, l'orientation géométrique prédéterminée permet, dans certains modes de réalisation, de pouvoir réaliser une analyse de la totalité de la surface de l'objet, notamment par un système d'imagerie. Avantageusement, l'orientation géométrique prédéterminée du pédoncule est maintenue lors de la rotation de l'objet au cours de son transport sur la ligne de convoyage.

Selon une caractéristique possible, chaque support comprend au moins deux parties qui sont disposées l'une à côté de l'autre suivant un agencement transversal relativement à la direction longitudinale d'avancement et qui sont chacune mobiles en rotation indépendamment l'une de l'autre, l'étape de mise en rotation dudit au moins un support comprenant la mise en rotation desdites au moins deux parties à des vitesses différentes l'une de l'autre ; ce différentiel de vitesse imposé auxdites au moins deux parties du support permet de faire tourner l'objet autour d'un axe non horizontal et ainsi d'orienter l'objet et donc son pédoncule dans une pluralité d'orientations géométriques possibles ; la sélection d'un différentiel de vitesse permet d'ajuster l'orientation géométrique globale du pédoncule ; en pratique, des vitesses différentes sont choisies pour la première partie du support et pour la deuxième partie disposée côte à côte avec la première partie suivant un agencement transversal ; plus particulièrement, le différentiel de vitesse peut être imposé aux éléments ou organes qui entraînent en rotation l'une et/ou l'autre desdites au moins deux parties du support.

Selon d'autres caractéristiques possibles :
- la mise en rotation dudit au moins un support oriente ou positionne le pédoncule suivant une orientation globalement transversale relativement à la direction longitudinale d'avancement et donc également la partie de l'objet à laquelle est raccordé le pédoncule; le pédoncule est ainsi globalement orienté sur l'un des deux côtés opposés ou flancs latéraux de la ligne de convoyage ; comme déjà mentionné, dans un plan vertical transversal cette orientation peut être vers le haut, vers le bas ou horizontalement et, dans un plan horizontal, cette orientation peut être vers l'avant, vers l'arrière ou perpendiculairement à la direction générale de la ligne de convoyage ;
- le procédé comporte une étape de mise en rotation dudit au moins un support qui est effectuée au moins durant une étape d'inspection ou de transformation de l'objet porté par ledit support avec son pédoncule orienté, de manière à provoquer la rotation dudit objet sur lui-même autour d'un axe (par exemple horizontal et transversal), en conservant l'orientation globalement transversale du pédoncule de l'objet ; une étape d'inspection peut être réalisée à l'aide d'un système optique ou d'un autre type de système, l'inspection étant généralement effectuée dans le but de détecter d'éventuels défauts sur l'objet afin de trier les objets en fonction du résultat de cette étape ; à titre d'exemple, il est ainsi possible d'inspecter notamment la partie de l'objet qui est située à l'opposé de la partie à laquelle est raccordé le pédoncule, partie de l'objet qui est orientée de manière globalement transversale, c'est-à-dire globalement tournée vers un des deux côtés opposés de la ligne ; l'étape de mise en rotation peut être effectuée autour d'un axe qui n'est pas nécessairement horizontal et transversal en fonction des besoins; on notera qu'une mise en rotation de l'objet porté par le support est généralement effectuée pour pouvoir inspecter de manière la plus complète possible la partie de l'objet qui est située à l'opposé de la partie à laquelle est raccordé le pédoncule ; cependant, une mise en rotation de l'objet porté par le support n'est généralement pas nécessaire pour effectuer une transformation de l'objet telle qu'une coupe du pédoncule ;
- préalablement à la mise en rotation dudit au moins un support d'objet qui a pour but de provoquer la rotation dudit objet autour d'un axe non horizontal et de conférer à son pédoncule une orientation géométrique prédéterminée, le procédé comporte au moins une étape préalable de mise en rotation dudit au moins un support de manière à provoquer la rotation adaptée dudit objet porté par ledit support autour d'un axe horizontal transversal afin de conférer au pédoncule de l'objet une orientation géométrique préalable;
- pour obtenir l'orientation géométrique préalable du pédoncule, le procédé peut, par exemple, comporter une seule étape préalable de mise en rotation dudit au moins un support de manière à provoquer la rotation adaptée dudit objet porté par ledit support autour d'un axe horizontal transversal et à conférer à son pédoncule une orientation géométrique préalable longitudinale qui est dirigée vers l'arrière ou vers l'avant de la ligne de convoyage ; alternativement, le procédé peut comporter deux étapes préalables successives de mise en rotation dudit au moins un support de manière à provoquer la rotation adaptée dudit objet porté par ledit support autour d'un axe horizontal transversal et à conférer successivement à son pédoncule une première orientation géométrique longitudinale qui est dirigée globalement vers l'arrière ou vers l'avant de la ligne de convoyage et une deuxième orientation géométrique longitudinale qui est dirigée de manière opposée à la première orientation géométrique et qui correspond à l'orientation géométrique préalable du pédoncule ; ces deux mises en rotation successives permettent de s'assurer que les pédoncules des objets auront tous la même orientation géométrique préalable avant de subir la mise en rotation qui va leur conférer l'orientation géométrique prédéterminée ; quel que soit le nombre de mises en rotation, la ou les pré-orientations des pédoncules peuvent être obtenues en ayant recours à des éléments latéraux de guidage qui flanquent les deux côtés opposés de la ligne de convoyage, et donc les supports des objets, et permettent ainsi de participer à l'orientation des pédoncules lors de la mise en rotation des objets en guidant les pédoncules.

L'invention a également pour objet un système de transport d'objets appartenant au groupe des fruits et légumes à pédoncule, comportant les caractéristiques de la revendication 6.

Ce système comporte les mêmes avantages que le procédé brièvement exposé ci-dessus. Comme pour le procédé, la ligne de convoyage peut transporter de nombreux supports et objets en adéquation avec une cadence de convoyage et des contraintes de production données. Par ailleurs, ce système est particulièrement simple à mettre en oeuvre et efficace.

Selon d'autres caractéristiques possibles :
- chaque support portant un objet comprend au moins deux parties qui sont disposées l'une à côté de l'autre suivant un agencement transversal relativement à la direction longitudinale d'avancement, chaque partie étant mobile en rotation indépendamment l'une de l'autre, la ligne de convoyage comprenant deux éléments de convoyage longitudinaux parallèles entre eux qui sont aptes à entraîner respectivement lesdites au moins deux parties de chaque support mobile d'objet suivant des vitesses d'avancement ou de déplacement longitudinales différentes l'une de l'autre de manière à provoquer une rotation de l'objet autour d'un axe non horizontal et à conférer à son pédoncule une orientation géométrique prédéterminée ; le choix du différentiel de vitesse entre les deux éléments de convoyage longitudinaux parallèles entre eux tient compte des vitesses qu'il est possible d'appliquer en pratique à ces éléments et des contraintes de production ;les éléments de convoyage longitudinaux sont généralement disposés sous les supports et en contact avec ces derniers ;
- chaque support portant un objet est formé par deux éléments de support allongés disposés chacun transversalement relativement à la direction longitudinale d'avancement, l'un derrière l'autre et qui sont conformés conjointement pour recevoir l'objet à porter ; les deux éléments sont plus particulièrement disposés de manière adjacente l'un par rapport à l'autre afin de définir conjointement entre eux un logement cavité pour recevoir l'objet à porter;

- chaque élément de support allongé transversal comprend deux portions disposées l'une à côté de l'autre suivant l'agencement transversal dudit élément relativement à la direction longitudinale d'avancement, chacune des deux portions étant mobile en rotation indépendamment l'une de l'autre ;
- chaque élément de support allongé transversal a une forme générale de révolution autour de l'axe longitudinal dudit élément allongé ;
- chacune des deux portions de chaque élément de support allongé transversal est un cône ou un cône tronqué dont les sommets sont orientés en vis-à-vis ou dont les bases sont éloignées l'une de l'autre ;
- chaque élément de convoyage longitudinal est choisi parmi une bande transporteuse, une chaîne, une courroie... ou tout autre élément capable d'assurer la même fonction;
- le système de transport d'objets comporte un système de tri sans contact des objets portés par les supports ; ce système de tri sans contact peut être un système optique permettant d'effectuer une analyse optique des objets par imagerie ; le système de tri peut être disposé sur la ligne de convoyage en aval de la zone où sont situés les deux éléments de convoyage longitudinaux parallèles ou il peut être situé en partie en aval de cette zone et en partie dans ladite zone, voire autrement ;
- le système de transport d'objets comporte un système de transformation des objets portés par les supports.

### Brève description des dessins

D'autres caractéristiques et avantages apparaitront au cours de la description qui va suivre, donnée uniquement à titre d'exemple non limitatif et faite en référence aux dessins annexés, sur lesquels :
[Fig. 1A] La Figure 1A est une vue schématique générale en perspective montrant un ensemble possible de plusieurs postes de mise en rotation d'un objet porté par un support selon un mode de réalisation de l'invention ;
[Fig. 1B] La Figure 1B est une vue partielle, dans un plan vertical transversal, d'un objet 18 sur un support 16 avec son pédoncule 18a orienté sur le côté au niveau du troisième poste 12c de la figure 1A ;
[Fig. 1C] La Figure 1C est une vue partielle de dessus, dans un plan horizontal, de l'objet de la figure 1B;
[Fig. 2] La Figure 2 est une vue schématique de dessus d'un exemple possible de support d'objet selon un mode de réalisation de l'invention ;
[Fig. 3] La Figure 3 représente le support de la figure 2 qui porte un objet 18 ;
[Fig. 4] La Figure 4 est une vue en coupe longitudinale du support des figures 2 et 3 ;
[Fig. 5] La Figure 5 est une vue en perspective agrandie et détaillée du troisième poste 12c de la figure 1A ;
[Fig. 6] La Figure 6 est une vue en perspective agrandie d'une première mise en rotation d'un objet pour obtenir une première pré-orientation de son pédoncule au premier poste 12a ;
[Fig. 7] La Figure 7 est une vue en perspective agrandie d'une deuxième mise en rotation de l'objet de la figure 6 pour obtenir une deuxième pré-orientation de son pédoncule au deuxième poste 12b;
[Fig. 8A] La Figure 8A illustre le début de la mise en rotation de l'objet de la figure 7 au troisième poste 12c ;
[Fig. 8B] La Figure 8B illustre la poursuite de la mise en rotation de l'objet initiée à la figure 8A au troisième poste 12c ;
[Fig. 8C] La Figure 8C illustre la fin de la mise en rotation de l'objet représentée aux figures 8A et 8B ;
[Fig. 9A] La Figure 9A représente une mise en rotation de l'objet au quatrième poste 12d avec l'orientation géométrique prédéterminée obtenue au troisième poste ;
[Fig. 9B] La Figure 9B est une vue générale en perspective d'un système d'inspection, de tri ou d'analyse d'objet intervenant au quatrième poste 12d ;
[Fig. 9C] La Figure 9C est une vue transversale du système et du quatrième poste 12d de la figure 9B.

### Description de mode(s) de réalisation

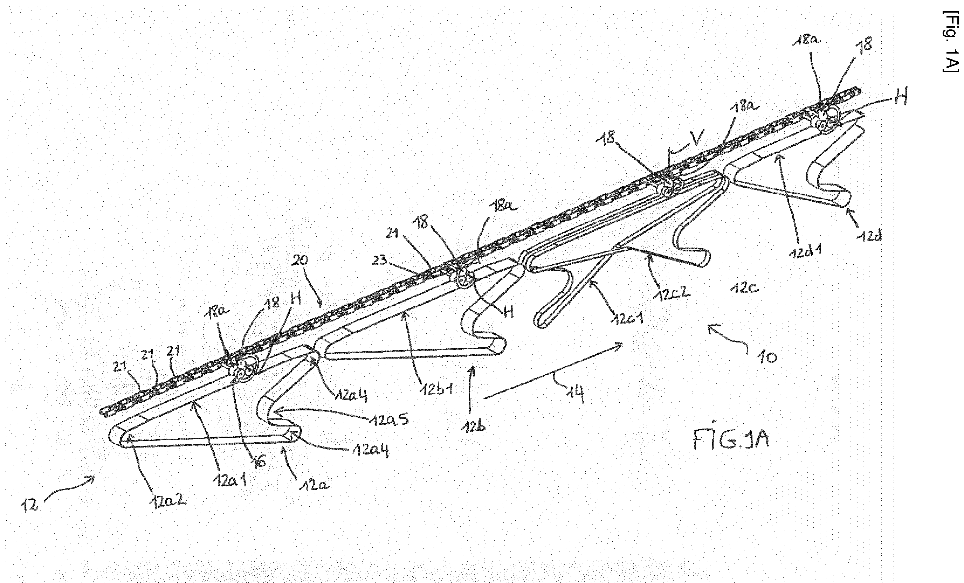

La Figure 1A représente de manière très schématique un système 10 de transport ou de convoyage d'objets appartenant au groupe des fruits et légumes à pédoncule. Le pédoncule d'un fruit ou d'un légume est la tige qui supporte le fruit ou le légume. Dans l'exemple représenté et qui sera repris sur les autres figures, les objets transportés sont des cerises mais peuvent bien entendu être tout autre fruit ou légume à pédoncule.

Le système de transport 10 comprend une ligne de convoyage 12 qui est apte à être entraînée en mouvement dans une direction longitudinale d'avancement représentée de manière symbolique par la flèche 14 qui va de gauche à droite sur la figure 1A.

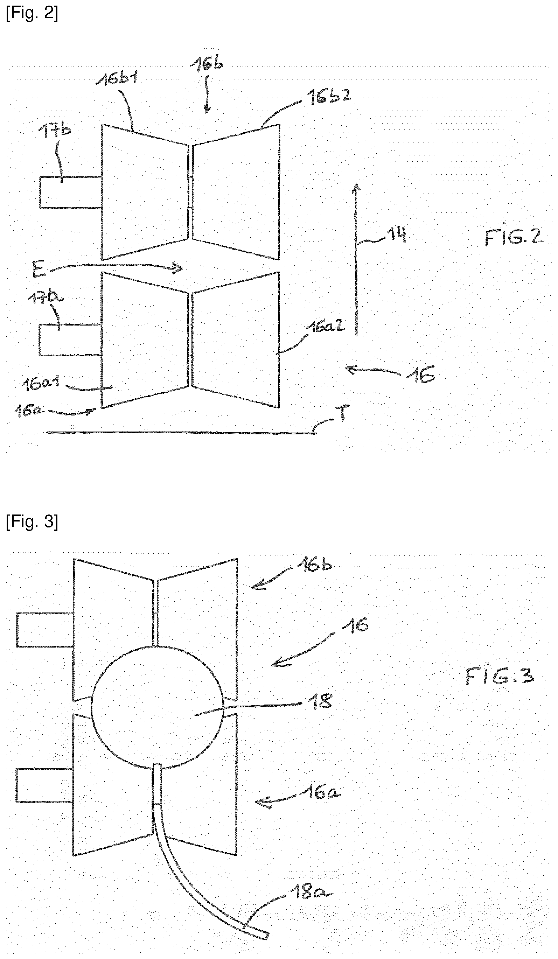

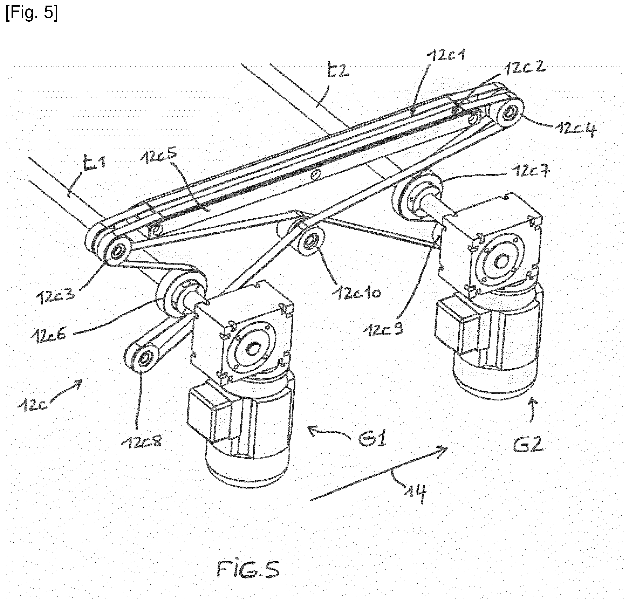

Le système 10 comprend également une pluralité de supports qui sont aptes, d'une part, à être entraînés par la ligne de convoyage 12 dans son mouvement d'avancement suivant la direction longitudinale 14 et, d'autre part, à porter chacun un objet tel qu'une cerise dans cet exemple. Dans l'exemple représenté sur la figure 1A seul un exemple possible de support d'objet 16 est représenté pour la clarté de l'exposé et un seul objet 18 est représenté avec son pédoncule 18a porté par un support 16. Cet exemple de support d'objet sera illustré plus en détail sur les figures 2 à 4. Sur la figure 1A le même support d'objet 16 est représenté aux différents postes de traitement de la ligne de convoyage qui seront détaillés ultérieurement aux figures 5 et suivantes. Lorsque la ligne de convoyage est en fonctionnement, généralement une pluralité de supports d'objets et d'objets sont disposés l'un derrière l'autre sur la ligne de convoyage, par exemple à quelques centimètres de distance les uns des autres afin d'assurer cadence de production industrielle.

La ligne de convoyage 12 comprend une chaîne sans fin 20 connue en soi, qui est enroulée sur deux pignons ou frettes d'extrémité (non représentés) de manière à former une boucle sans fin. Au moins un des deux pignons est entraîné en rotation par un dispositif moteur (non représenté) par rapport à bâti (non représenté) de la ligne de convoyage de sorte que la chaîne sans fin 20 est également entraînée par ce pignon de manière continue selon sa direction longitudinale et dans le sens indiqué par la flèche 14. Alternativement, un autre ensemble d'entraînement pourrait être utilisé dans la ligne de convoyage pour entraîner les supports dans un mouvement de translation longitudinale. Les supports d'objets sont fixés à la chaîne sans fin qui est formée par des maillons successifs 21, connus en soi, articulés les uns aux autres deux à deux par des axes transversaux horizontaux 23, tous parallèles les uns aux autres. Un axe transversal est agencé perpendiculairement à la direction longitudinale d'avancement 14 de la ligne de convoyage et il s'agit ici d'un axe horizontal. Les supports d'objets sont par exemple fixés aux axes transversaux des maillons ou par l'intermédiaire d'une autre pièce. Les axes transversaux 23 des maillons 21 s'étendent transversalement en faisant saillie à côté de la chaîne sans fin 20 pour permettre le montage sur ces axes des supports d'objets qui seront décrits ultérieurement. Ces supports d'objets se déplacent longitudinalement, parallèlement à la chaîne sans fin et à côté de celle-ci, suivant un même plan horizontal.

Le système de transport 10 permet d'orienter les pédoncules 18a des objets portés par les supports suivant une orientation géométrique prédéterminée, par exemple, afin d'effectuer un tri notamment sans contact de ces objets en inspectant/analysant les objets selon toute orientation choisie, par exemple dans le but de détecter d'éventuels défauts sur un ou plusieurs objets. Le tri peut être réalisé en effectuant une analyse optique par imagerie des objets. Le fait de pouvoir orienter les pédoncules des objets suivant une orientation géométrique prédéterminée choisie parmi plusieurs orientations géométriques prédéterminées possibles permet de réaliser une analyse optique par imagerie sur toute la surface extérieure des objets et, notamment, sur la zone ou partie des objets qui est opposée à celle à laquelle est raccordé le pédoncule. On notera que plusieurs orientations géométriques prédéterminées successives peuvent être données aux pédoncules des objets afin que ces derniers puissent être inspectés/analysés suivant ces différentes orientations possibles.

La ligne de convoyage 12 comprend une succession de postes ou zones de traitement alignés l'un derrière l'autre suivant la direction longitudinale 14, parallèlement à la chaîne sans fin 20, et par lesquels passent les supports d'objets acheminés par la ligne.

Dans l'exemple représenté sur la figure 1A on dénombre quatre postes de traitement 12a-d bien qu'un nombre différent de postes puisse être envisagé dans d'autres configurations.

Les deux premiers postes 12a et 12b de mise en rotation des objets sont optionnels et ont ici pour but de s'assurer que les pédoncules des objets portés par les supports successifs ont tous la même orientation géométrique préalable en arrivant au troisième poste de traitement 12c. L'ordre des postes 12a et 12b peut être inversé. Il s'agit en quelque sorte de réaliser un pré-positionnement ou une pré-orientation longitudinale avant ou arrière des pédoncules des objets. Par ailleurs, seul un des postes peut être utilisé pour conférer une orientation géométrique préalable ou pré-orientation longitudinale avant ou arrière aux pédoncules avant le troisième poste. Alternativement, la ligne de convoyage peut ne comporter aucun poste de pré-orientation des pédoncules des objets avant le poste 12c.

Le troisième poste 12c a pour but de conférer à chacun des pédoncules 18a des objets portés par les supports une orientation géométrique prédéterminée qui est la même pour tous les pédoncules des objets. Cette orientation géométrique va être utilisée au poste suivant, en l'occurrence ici pour une inspection/analyse des objets ainsi orientés. Alternativement, cette orientation géométrique peut être utilisée à d'autres fins, par exemple pour une étape de transformation des objets tels qu'une coupe des pédoncules. Cette orientation géométrique est obtenue en faisant tourner chaque objet autour d'un axe non horizontal qui, dans l'exemple représenté sur la figure 1A, est un axe vertical V. Dans l'exemple illustré les pédoncules 18a sont globalement orientés vers l'un des deux côtés ou flancs opposés de la ligne de convoyage de manière à ce que la zone ou partie de l'objet qui est opposée à celle raccordée au pédoncule soit orientée en direction du côté opposé de la ligne de convoyage. Par souci de simplification le pédoncule représenté au troisième poste 12c possède une orientation géométrique qui est précisément confondue avec une direction transversale horizontale mais on verra ci-dessous qu'en pratique l'orientation géométrique des pédoncules n'est pas nécessairement confondue avec une telle direction.

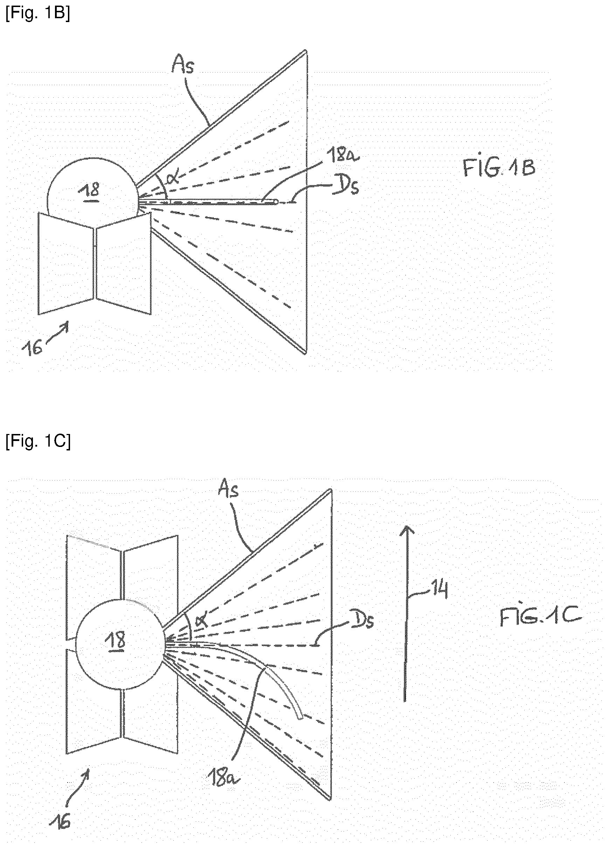

L'orientation géométrique conférée au pédoncule de l'objet est considérée de manière globale, c'est-à-dire qu'elle correspond à une orientation géométrique qui a globalement une direction principale, par exemple une direction « transversale » ou « latérale » par rapport à la direction d'avancement longitudinale du convoyeur, mais qui peut varier autour de cette direction principale à l'intérieur d'un angle solide centré sur ladite direction principale. On a représenté aux figures 1B (vue partielle d'un objet 18 sur un support 16 avec son pédoncule 18a orienté sur le côté dans un plan vertical transversal au niveau du troisième poste 12c) et 1C (vue partielle de dessus du même objet 18 sur le support 16 avec son pédoncule orienté sur le côté dans un plan horizontal au niveau du troisième poste 12c) une illustration de cette orientation géométrique globale inscrite dans un angle solide As. Un angle solide As est défini comme étant une portion de l'espace délimitée par un cône dont le sommet est le sommet de l'angle solide. Le cône est par exemple un cône de révolution. Ici le sommet du cône est situé à la base du pédoncule 18a, là où il se raccorde à l'objet. Ainsi, l'orientation géométrique prédéterminée conférée au pédoncule 18a de l'objet est incluse dans cet angle solide mais ne correspond pas nécessairement à la direction principale Ds de cet angle solide qui, dans l'exemple précité, correspond à une direction transversale horizontale. Le cône de l'angle solide a généralement un demi-angle au sommet α qui est inférieur à 90° si bien que le pédoncule 18a de l'objet peut adopter une orientation géométrique prédéterminée s'écartant de la direction principale de l'angle solide suivant un angle inférieur à 90°. Par souci de simplification et de cohérence, le pédoncule des figures 1B et 1C a été représenté avec la même orientation que sur la figure 1A. Ainsi, dans l'exemple d'une orientation géométrique globale du pédoncule suivant une direction principale Ds qui est transversale ou latérale par rapport à la direction d'avancement longitudinale du convoyeur (flèche 14 sur la figure 1C) :
- si l'on se place dans un plan vertical agencé transversalement par rapport à la direction générale de la ligne de convoyage (fig. 1B), le pédoncule 18a peut être orienté horizontalement, c'est-à-dire précisément selon la direction principale Ds de l'angle solide As, ou vers le haut ou le bas par rapport à cette orientation horizontale, l'orientation vers le haut ou vers le bas étant comprise à l'intérieur de l'angle solide concerné As, c'est-à-dire suivant un angle d'inclinaison inférieure à 90° par rapport à la direction principale Ds du cône en vue dans un plan vertical ; ou
- si l'on se place dans un plan horizontal incluant la direction générale de la ligne de convoyage (fig. 1C), le pédoncule 18a peut être orienté perpendiculairement à la direction générale de la ligne de convoyage (direction Ds), ou vers l'avant ou l'arrière par rapport à cette orientation perpendiculaire, c'est-à-dire suivant un angle d'inclinaison inférieure à 90° par rapport à la direction principale Ds du cône en vue dans un plan horizontal. Les lignes pointillées partant du sommet du cône sur les figures 1B et 1C illustrent des exemples possibles d'orientations géométriques qui correspondent chacune à l'orientation géométrique prédéterminée globale contenue dans l'angle solide de direction principale Ds « transversale ». Tout ce qui a été dit ci-dessus à propos d'une orientation géométrique globalement « transversale » ou « latérale » peut s'appliquer à toute autre orientation géométrique.

D'autres orientations géométriques prédéterminées des pédoncules des objets sont bien entendu envisageables au troisième poste 12c en effectuant une rotation autour d'un axe non horizontal et qui n'est pas vertical. L'orientation choisie ici n'est qu'un exemple parmi une pluralité d'autres orientations possibles.

Après le passage par le troisième poste 12c les pédoncules ont tous la même orientation géométrique prédéterminée (ici globalement tournée sur un des côtés de la ligne de convoyage et, plus précisément, en direction de la chaîne sans fin) et parviennent au quatrième poste 12d où les objets sont entraînés en rotation sur eux-mêmes autour d'un axe horizontal transversal H relativement à direction longitudinale d'avancement 14 de la ligne de convoyage. L'orientation géométrique prédéterminée globalement latérale des pédoncules 18a (tournée sur le côté) est conservée durant cette étape même si le pédoncule est amené à tourner sur lui-même au cours de cette rotation. À cette étape, les objets peuvent être inspectés par exemple par un système d'analyse optique par imagerie connu en soi et non représenté.

De manière générale, un support d'objet au sens de l'invention comprend au moins deux parties qui sont disposées l'une à côté de l'autre suivant un agencement transversal relativement à la direction longitudinale d'avancement 14 de la ligne de convoyage. Chacune desdites au moins deux parties est mobile en rotation indépendamment de l'autre partie et la rotation de chaque partie est généralement effectuée autour d'un axe transversal relativement à la direction longitudinale d'avancement 14. Cette configuration permet de mettre en rotation l'une desdites au moins deux parties à une vitesse tandis que l'autre partie est mise en rotation à une vitesse différente, ce qui permet de faire tourner l'objet porté par lesdites au moins deux parties autour d'un axe non horizontal (axe vertical H dans l'exemple décrit) et ainsi d'orienter le pédoncule de l'objet suivant l'orientation géométrique choisie. Alternativement, l'une desdites au moins deux parties peut être mise en rotation à une vitesse tandis que l'autre partie n'est pas mise en rotation. Bien entendu, chacune desdites aux moins deux parties peut être mise en rotation à la même vitesse selon les besoins.

Comme représenté en vue de dessus sur la figure 2, un support d'objet 16 selon un mode de réalisation de l'invention est formé par deux éléments de support allongés 16a et 16b qui sont disposés transversalement l'un derrière l'autre suivant la direction longitudinale d'avancement 14. Les deux éléments de support allongés 16a et 16b sont disposés de manière adjacente l'un par rapport à l'autre (non nécessairement en contact) et conformés conjointement pour recevoir l'objet à porter entre eux. L'objet est positionné dans un logement (cavité) qui est défini partiellement par l'espace E longitudinal ménagé entre les deux éléments 16a et 16b et partiellement par les deux parties adjacentes en vis-à-vis desdits deux éléments. La Figure 3 illustre un objet 18 (ex : cerise) porté par les deux éléments 16a et 16b. Ces éléments de support allongés peuvent bien entendu porter d'autres types de fruits et légumes selon les besoins.

Comme représenté sur les figures 2 et 3, chaque élément de support allongé 16a-b peut avoir une forme générale de révolution autour de l'axe longitudinal de l'élément.

Chaque élément de support allongé 16a-b est disposé transversalement relativement à la direction longitudinale d'avancement 14 de telle façon que l'axe longitudinal de chaque élément allongé a une disposition transversale (agencement transversal symbolisé par la ligne repérée par la lettre T sur la figure 2).

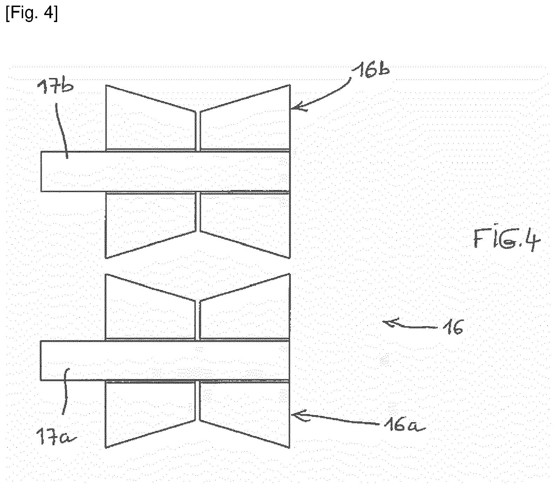

Comme représenté en coupe sur la figure 4, chaque élément de support allongé 16a-b est monté libre en rotation sur un axe transversal 17a-17b correspondant à l'axe longitudinal de l'élément. L'axe transversal 17a-17b est par exemple couplé mécaniquement à l'axe transversal 23 d'un maillon 21 de la chaîne (non représenté sur les figures) ou, alternativement, correspond à l'axe transversal lui-même..

Comme représenté sur les figures 2 à 4, chaque élément de support allongé 16a-b comprend deux portions disposées l'une à côté de l'autre suivant l'agencement transversal T de chaque élément. Les deux portions 16a1, 16a2 de l'élément 16a (resp. 16b1, 16b2 de l'élément 16b) sont alignées l'une avec l'autre suivant l'axe transversal 17a (resp. 17b) et sont chacune montées libre en rotation autour dudit axe et mobiles en rotation indépendamment l'une de l'autre.

Chaque portion d'élément de support allongé 16a-b a par exemple une forme générale d'aspect tronconique et les deux portions de forme générale tronconiques sont disposées l'une par rapport à l'autre de manière à ce que les sommets des cônes soient orientés l'un en direction de l'autre tandis que les bases des cônes sont disposées en éloignement l'une de l'autre (les bases sont disposées sur l'extérieur du support). La configuration générale de chaque portion d'élément de support allongé a une forme générale de bi-cône ou de sablier. L'objet porté par les deux portions d'éléments de support allongés repose ainsi au contact des zones tronconiques de chacune des portions illustrées sur les figures 2 à 4. D'autres formes générales de portions d'élément de support allongé peuvent être utilisées à titre de variantes de réalisation. De même, les formes générales d'aspect tronconique peuvent présenter des variations de forme, notamment locales. Par exemple, plusieurs disques agencés côte à côte suivant une disposition transversale peuvent former un élément de support allongé. Les disques peuvent avoir tous le même diamètre ou bien les disques disposés aux deux extrémités opposées de l'agencement peuvent avoir des diamètres supérieurs à ceux des disques intermédiaires. Le profil général de ces disques agencés côte à côte transversalement peut par exemple suivre la forme ou contour d'un sablier ou d'un diabolo.

De retour à la figure 1A, chacun parmi les deux premiers postes 12a-b et le quatrième poste 12d a, dans cet exemple, la même configuration et comprend un élément de convoyage longitudinal 12a1, 12b1 et 12d1 sur lequel les supports 16 reposent. Au contact de chacun de ces éléments 12a1, 12b1 et 12d1 en mouvement à une certaine vitesse, les supports 16 qui sont entraînés dans un mouvement de translation longitudinale par la chaîne sans fin 20 à une vitesse donnée différente sont également entraînés en rotation autour d'un axe horizontal transversal H.

Chaque élément de convoyage longitudinal 12a1, 12b1 et 12d1 est par exemple une courroie connue en soi qui est enroulée sur deux poulies d'extrémité (non représentées), ainsi que sur une troisième et une quatrième poulies (non représentées) disposées en partie basse de manière à ce que la courroie ainsi configurée forme une boucle sans fin sensiblement agencée dans un plan vertical d'extension longitudinale. On a identifié uniquement sur le premier poste 12a les emplacements des différentes poulies d'axe de rotation transversaux : les emplacements 12a2 et 12a3 des deux poulies d'extrémité et l'emplacement 12a4 de la troisième poulie qui est par exemple une poulie de renvoi et l'emplacement 12a5 de la quatrième poulie qui est par exemple une poulie motrice, le dispositif moteur d'entraînement de cette poulie n'étant pas représenté ici. Inversement, la poulie motrice et la poulie de renvoi peuvent être inversées. La poulie motrice est entraînée en rotation de manière continue par le dispositif moteur par rapport au bâti mentionné plus haut de sorte que la courroie est également entraînée de manière continue selon sa direction longitudinale et dans le sens indiqué par la flèche 14.

On notera que l'élément de convoyage longitudinal décrit ici peut être remplacé par une bande transporteuse, une chaîne ou tout autre élément dans la mesure où les supports d'objets peuvent être entraînés en rotation sur eux-mêmes au contact de cet élément de convoyage longitudinal dont la longueur est ajustée pour coopérer avec une pluralité de supports d'objets.

Le troisième poste 12c de la ligne de convoyage de la figure 1A comprend deux éléments de convoyage longitudinaux parallèles entre eux, 12c1 et 12c2, qui sont aptes chacun à se déplacer suivant la direction longitudinale d'avancement 14 à des vitesses d'avancement longitudinales différentes l'une de l'autre de manière à faire tourner, à des vitesses de rotation différentes, les parties des supports d'objets en contact avec les deux éléments de convoyage longitudinaux respectifs 12c1 et 12c2 (ces vitesses d'avancement longitudinales sont différentes de la vitesse d'avancement de la chaîne sans fin qui entraîne les supports d'objets dans un mouvement d'avancement longitudinal). On crée ainsi un différentiel de vitesse entre les deux parties mobiles indépendantes de chaque support, ce qui impose ainsi un différentiel de vitesse de rotation au niveau des zones de l'objet en contact avec ces parties respectives.

La Figure 5 illustre plus en détail un exemple de configuration possible pour le troisième poste 12c. Chaque élément de convoyage longitudinal est ici une courroie mais, comme pour les éléments de convoyage longitudinaux des autres postes, il peut prendre toute autre forme telle qu'une bande transporteuse, une chaîne... Chaque élément de convoyage longitudinal est conformé verticalement de manière à former un élément longitudinal sans fin en étant enroulé autour de plusieurs poulies et/ou galets qui permettent son guidage et son entraînement notamment en translation suivant la direction longitudinale d'avancement 14. Comme représenté sur la figure 1, chaque élément de convoyage longitudinal 12c1, 12c2 possède une largeur (dimension transversale) inférieure à celle des éléments de convoyage longitudinaux des autres postes de manière à ce que les deux éléments de convoyage longitudinaux 12c1 et 12c2 puissent être agencés côte à côte sans se toucher, tout en étant capable d'entrer en contact avec les parties mobiles en rotation des supports d'objets et ce, sans augmenter de manière globale l'encombrement transversal de la ligne de convoyage.

Plus particulièrement, chaque élément de convoyage longitudinal est monté enroulé autour de deux poulies d'extrémité 12c3 et 12c4 et la partie longitudinale horizontale de chaque élément situé entre ces deux poulies est supportée par un châssis central 12c5 (un châssis similaire peut être présent pour chacune des courroies des autres postes). En partant d'une première des deux poulies d'extrémité (la première poulie d'extrémité n'est pas la même pour les deux éléments de convoyage), chaque élément de convoyage longitudinal est conformé de manière à s'enrouler autour d'une poulie motrice 12c6 (pour l'élément 12c2) et 12c7 (pour l'élément 12c1) située à une altitude inférieure à celle de la poulie d'extrémité de départ et décalée verticalement par rapport à cette dernière. Chaque poulie motrice est montée sur un arbre transversal t1 ou t2 relié, à une extrémité, à un groupe d'entraînement motorisé G1 ou G2, par exemple du type motoréducteur, et à l'extrémité opposée, au bâti mentionné plus haut et non représenté. Chaque élément de convoyage longitudinal s'étend ensuite de manière à s'enrouler autour d'un galet tendeur 12c8 (pour l'élément 12c2) ou 12c9 (pour l'élément 12c1) situé à une altitude inférieure à celle de la poulie motrice et décalée verticalement par rapport à cette dernière. Chaque élément de convoyage longitudinal remonte ensuite en direction de la deuxième poulie d'extrémité en passant sur une poulie ou galet intermédiaire 12c10, par exemple commun aux deux éléments de convoyage longitudinaux. Les deux éléments de convoyage longitudinaux parallèles présentent une configuration symétrique l'une par rapport à l'autre par rapport à un plan vertical médian contenant l'axe de rotation du galet 12c10. Ainsi, à partir des poulies de renvoi, les deux éléments de convoyage longitudinaux remontent chacun en direction de leur deuxième poulie d'extrémité supérieure en se croisant au niveau du galet 12c10 suivant une vue prise en projection dans un plan vertical perpendiculaire aux deux arbres transversaux t1 et t2.Tous les axes de rotation des différentes poulies et galets sont transversaux, parallèles les uns avec les autres et perpendiculaires à un même plan vertical.

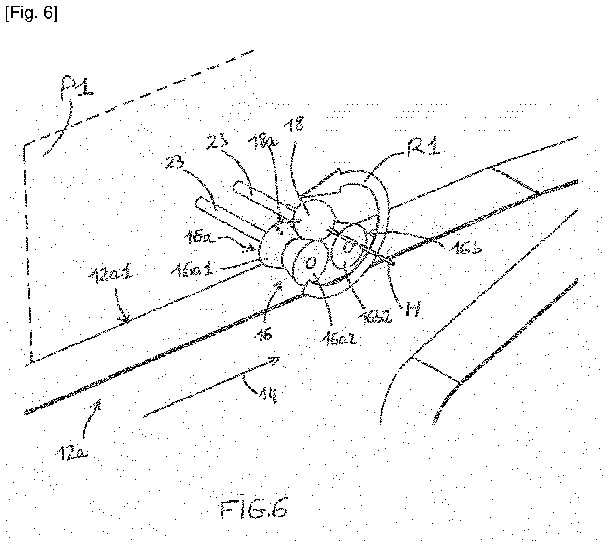

On va maintenant décrire en référence aux figures 6 à 9 différentes étapes successives d'un mode de réalisation d'un procédé de transport ou convoyage d'objets mis en oeuvre par le système de transport ou de convoyage 10 qui vient d'être décrit. On notera que le procédé peut alternativement être mis en oeuvre par un système de configuration différente.

Sur la figure 6 on a représenté un support d'objet 16 formé de deux éléments de support allongés 16a et 16b du type de ceux décrits en référence aux figures 2 à 4 et qui portent conjointement au-dessus d'eux un objet 18 doté d'un pédoncule 18a. Comme illustré par la flèche R1, une rotation anti horaire est ici appliquée au support d'objet autour d'un axe transversal horizontal H. Le mouvement de rotation est appliqué de manière simultanée à chacune des deux portions 16a1, 16a2 et 16b1, 16b2 de chaque élément de support allongé 16a et 16b qui sont toutes en contact avec le même élément de convoyage longitudinal 12a1 entrainé en translation dans la direction 14 (premier poste 12a). La rotation anti horaire est obtenue ici grâce à une vitesse de déplacement de l'élément de convoyage longitudinal 12a1 qui est inférieure à la vitesse de déplacement de la chaîne sans fin 20 de la figure 1A. La première rotation préalable effectuée permet de conférer au pédoncule 18a une pré-orientation longitudinale arrière. Cette pré-orientation est obtenue également grâce à la présence de deux parois parallèles entre elles qui encadrent latéralement l'élément de convoyage 12a1 afin de guider l'orientation du pédoncule de l'objet vers l'arrière et éviter qu'il ne se positionne de manière incontrôlée sur un des côtés. Seule la paroi arrière P1 est ici représentée tandis que la paroi avant a été omise afin de ne pas surcharger le dessin.

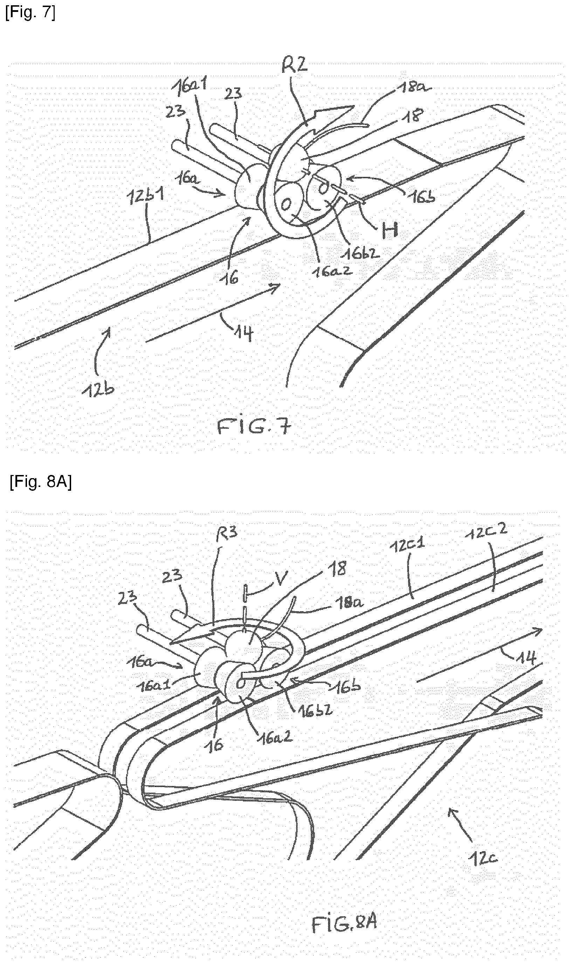

Sur la figure 7 on a représenté le même support d'objet 16 que sur la figure 6 avec l'objet 18. Comme illustré par la flèche R2, une rotation horaire est ici appliquée au support d'objet autour d'un axe transversal horizontal H. Le mouvement de rotation est appliqué de manière simultanée à chacune des deux portions 16a1, 16a2 et 16b1, 16b2 de chaque élément de support allongé 16a et 16b qui sont toutes en contact avec le même élément de convoyage longitudinal 12b1 entrainé en translation dans la direction 14 (deuxième poste 12b). ). La rotation horaire est obtenue ici grâce à une vitesse de déplacement de l'élément de convoyage longitudinal 12a1 qui est supérieure à la vitesse de déplacement de la chaîne sans fin 20 de la figure 1A. La deuxième rotation préalable effectuée permet de conférer au pédoncule 18a une pré-orientation longitudinale avant. Cette pré-orientation est obtenue également grâce à la présence de deux parois parallèles entre elles qui encadrent latéralement l'élément de convoyage 12b1 afin de guider l'orientation du pédoncule de l'objet de l'arrière (pré-orientation de la figure 6) vers l'avant lors de la mise en rotation de l'objet (ici le pédoncule pivote de l'arrière vers l'avant grâce à la présence des parois latérales qui contraignent son déplacement suivant cet agencement longitudinal). Ici les deux parois latérales n'ont pas été représentées par souci de clarté mais elles sont similaires à celles de la figure 6.

Les objets dont les pédoncules 18a ont été pré-orientés ou pré-positionnés vers l'avant au deuxième poste 12b (le même raisonnement peut être effectué avec une orientation du pédoncule vers l'arrière) atteignent le troisième poste 12c où ils vont être soumis à un différentiel de vitesse par l'intermédiaire des parties de support qui les portent.

Au troisième poste 12c, chaque élément de convoyage longitudinal 12c1, 12c2 est entraîné dans un mouvement de translation longitudinale à une vitesse qui diffère d'un élément à l'autre grâce aux groupes d'entraînements motorisés respectifs associés à ces éléments (fig.5) et qui peuvent être commandés de manière appropriée et sélective, notamment de manière automatique. Ainsi, les deux portions 16a1 et 16b1 des deux éléments de support allongés 16a et 16b sont entraînés en rotation autour de leur axe longitudinal (voir figures 2 à 4) par l'élément de convoyage 12c1 à une première vitesse tandis que les deux portions 16a2 et 16b2 des deux éléments de support allongés 16a et 16b sont entraînés en rotation autour de leur axe longitudinal (voir figures 2 à 4) par l'élément de convoyage 12c2 à une deuxième vitesse différente de la première. En sélectionnant de manière appropriée le différentiel de vitesse entre les deux éléments de convoyage longitudinaux on met ainsi en rotation de manière appropriée et indépendante les parties de support concernées (avec des vitesses différentes entre les parties de support situées au contact des deux éléments de convoyage adjacents), ce qui provoque la rotation de l'objet 18 autour d'un axe non horizontal. Comme représenté sur la figure 8A, la rotation impartie à l'objet et à son pédoncule est ici une rotation d'axe vertical V symbolisée par la flèche R3 (rotation anti horaire). Pour obtenir cette rotation, la vitesse d'entraînement de l'élément de convoyage 12c1 est supérieure à celle de l'élément de convoyage 12c2 et la vitesse de déplacement de la chaîne sans fin 20 de la figure 1A est comprise entre les vitesses d'entraînement des deux éléments de convoyage.

On notera que si le pédoncule 18a arrive au troisième poste 12c avec une orientation arrière alors il conviendrait de mettre en rotation l'objet autour d'un axe vertical suivant un mouvement de rotation en sens opposé de celui représenté sur la figure 8A (c'est-à-dire suivant une rotation horaire) afin d'arriver en sortie du troisième poste avec la même orientation pour le pédoncule. Pour ce faire, il faudrait inverser l'ordre de grandeur des vitesses d'entraînement des éléments de convoyage.

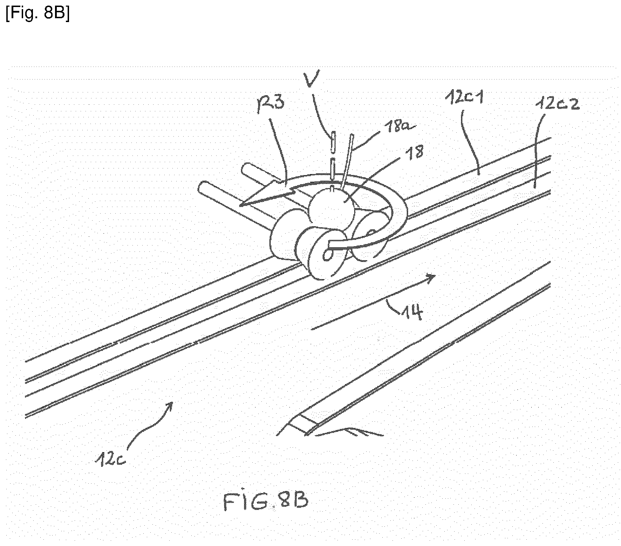

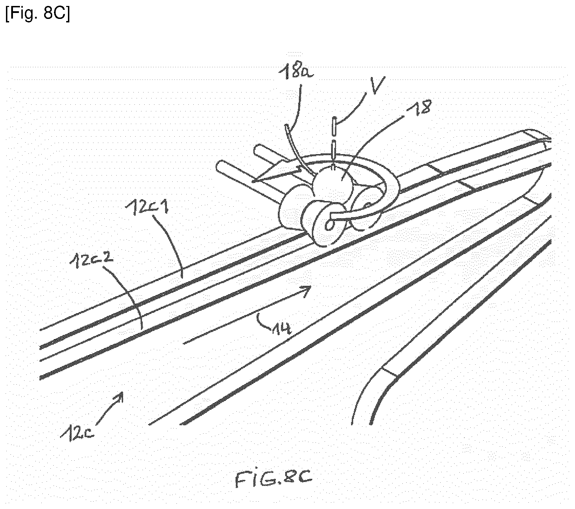

Les figures 8B et 8C illustrent la fin du mouvement de rotation du troisième poste 12c qui a été initié à la figure 8A et montrent que le pédoncule 18a a été orienté de manière globalement transversale relativement à la direction longitudinale d'avancement des éléments de convoyage longitudinaux comme cela a été expliqué plus haut, notamment en référence aux figures 1A-C. Le pédoncule est ainsi globalement orienté sur l'un des côtés de la ligne de convoyage, ici le côté qui est en vis-à-vis de la chaîne sans fin. Alternativement, le pédoncule peut être orienté en direction du côté opposé. Selon encore une autre alternative, le pédoncule peut adopter une orientation différente de celles qui viennent d'être mentionnées en fonction des besoins de la ligne de convoyage et des opérations à effectuer.

Les objets dont les pédoncules 18a ont été globalement orientés ou positionnés sur le côté ou latéralement au troisième poste 12c (le même raisonnement peut être effectué avec une orientation du pédoncule différente) atteignent le quatrième poste 12d où ils vont être soumis, par exemple, à une étape d'inspection ou d'analyse en fonction de leur orientation ou positionnement.

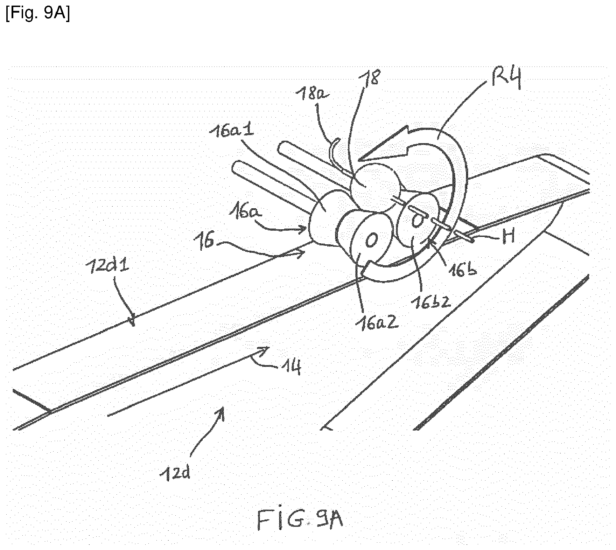

La Figure 9A illustre le déroulement de cette étape en omettant toutefois de représenter le système d'inspection, de tri (ex : calibrage) ou d'analyse de type connu pouvant être utilisé. Le pédoncule 18a de l'objet 18 étant orienté de manière globalement transversale relativement à la direction longitudinale d'avancement 14 de la ligne de convoyage, l'orientation globalement transversale du pédoncule est sensiblement conservée lors de la mise en rotation, suivant la flèche anti horaire R4, de toutes les portions mobiles du support d'objet 16 autour d'un axe transversal horizontal H. L'objet et son pédoncule sont ainsi entraînés en rotation autour de l'axe H durant cette étape, ce qui permet notamment d'inspecter la zone de l'objet qui est opposée à celle à laquelle est raccordé le pédoncule, ce qui était très difficile avec les techniques connues de l'art antérieur. Cette étape permet notamment d'effectuer une inspection ou analyse des objets portés par les supports, notamment des zones de ces objets qui sont difficiles d'accès, sans établir de contact physique avec lesdits objets. Ceci est particulièrement avantageux lorsque l'on ne souhaite pas prendre le risque de les endommager avec un contact physique. On notera que l'étape de mise en rotation de l'objet durant l'étape d'inspection n'est pas obligatoire. Selon une variante, la rotation peut être effectuée de façon temporaire lors de l'étape d'inspection.

Comme le pédoncule peut prendre différentes orientations géométriques prédéterminées suite à la mise en rotation effectuée au troisième poste 12c (autour d'un axe non horizontal), différentes zones de l'objet peuvent ensuite être inspectées au quatrième poste selon les besoins de l'installation.

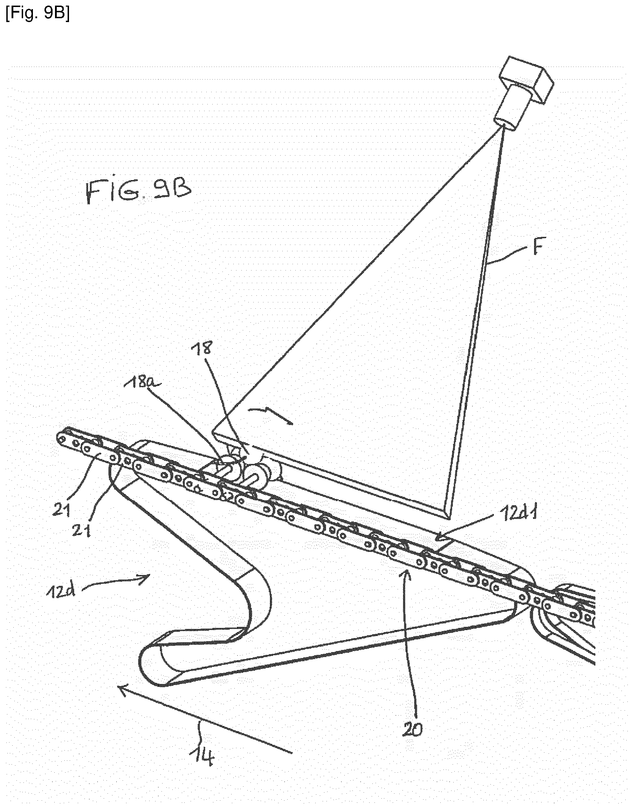

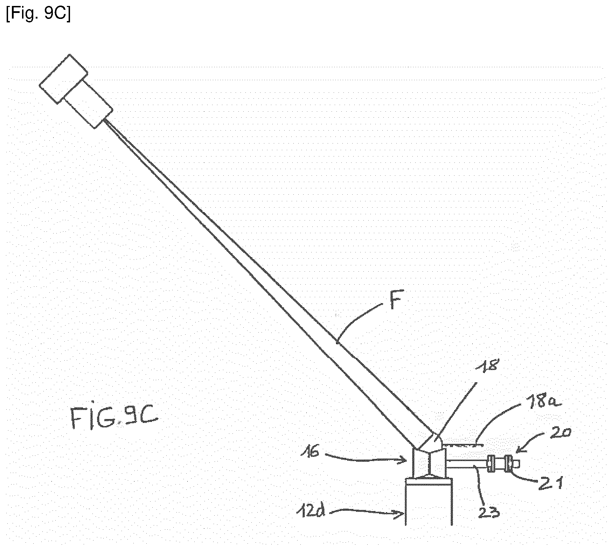

Les figures 9B et 9C illustrent un système d'inspection, de tri ou d'analyse de type connu 30 qui permet d'effectuer une étape d'inspection, sans contact, sur les parties des objets 18 opposées à celles portant le pédoncule orienté de manière globalement transversale, au niveau du quatrième poste 12d. Comme représenté sur ces figures, le système d'inspection 30 est par exemple de type optique. Il est disposé en hauteur relativement à la cote à laquelle se trouve la ligne de convoyage et du côté opposé au côté vers lequel est orientée le pédoncule des objets (Fig.9C). Le système d'inspection 30 est par exemple un système d'imagerie optique le type connu. Comme représenté sur ces figures, le système 30 émet un faisceau optique F qui est par exemple suffisamment large pour englober plusieurs objets simultanément (Fig.9B) bien que cela ne soit nullement une obligation.

Selon une variante non représentée, un système de transformation des objets peut être adjoint à la ligne de convoyage par exemple pour réaliser une étape de transformation sur les objets, à la place de l'étape d'inspection, de tri ou d'analyse ou en plus de cette étape et, par exemple, à la suite de cette étape.

La transformation envisagée nécessite généralement un contact avec les objets à transformer et peut, par exemple, être une étape de coupe des pédoncules des objets, bien que d'autres transformations puissent être envisagées

## Revendications

1. Procédé de transport d'objets appartenant au groupe des fruits et légumes à pédoncule, comportant les étapes suivantes :
- convoyage d'une pluralité d'objets (18) sur une ligne de convoyage (12) suivant une direction d'avancement longitudinale (14), chaque objet convoyé étant porté par un support (16) qui est entrainé par la ligne de convoyage (12) dans son mouvement d'avancement longitudinal,
- mise en rotation d'au moins un support (16) d'un objet (18) de manière à provoquer la rotation dudit objet (18) autour d'un axe non horizontal ;
la mise en rotation dudit au moins un support (16) étant réalisée de manière à conférer au pédoncule (18a) dudit objet (18) une orientation géométrique prédéterminée, **caractérisé par**:
maintenir cette orientation géométrique prédéterminée lors de la rotation dudit objet (18) autour de l'axe non horizontal.

2. Procédé selon la revendication 1, **caractérisé en ce que** chaque support (16) comprend au moins deux parties (16a1, 16a2, 16b1, 16b2) qui sont disposées l'une à côté de l'autre suivant un agencement transversal relativement à la direction longitudinale d'avancement et qui sont chacune mobiles en rotation indépendamment l'une de l'autre, l'étape de mise en rotation dudit au moins un support (16) comprenant la mise en rotation desdites au moins deux parties (16a1 et 16a2, 16b1 et 16b2) à des vitesses différentes l'une de l'autre.

3. Procédé selon la revendication 1 ou 2, **caractérisé en ce que** la mise en rotation dudit au moins un support (16) oriente le pédoncule (18a) suivant une orientation globalement transversale relativement à la direction longitudinale d'avancement (14).

4. Procédé selon la revendication 3, **caractérisé en ce qu'**il comporte une étape de mise en rotation dudit au moins un support (16) qui est effectuée au moins durant une étape d'inspection ou de transformation de l'objet (18) porté par ledit support avec son pédoncule (18a) orienté, de manière à provoquer la rotation dudit objet sur lui-même autour d'un axe, en conservant l'orientation globalement transversale du pédoncule de l'objet.

5. Procédé selon l'une des revendications 1 à 4, **caractérisé en ce que**, préalablement à la mise en rotation dudit au moins un support (16) d'objet qui a pour but de provoquer la rotation dudit objet (18) autour d'un axe non horizontal et de conférer à son pédoncule (18a) une orientation géométrique prédéterminée, le procédé comporte au moins une étape préalable de mise en rotation dudit au moins un support (16) de manière à provoquer la rotation adaptée dudit objet porté par ledit support autour d'un axe horizontal transversal afin de conférer au pédoncule(18a) de l'objet une orientation géométrique préalable.

6. Système (10) de transport d'objets appartenant au groupe des fruits et légumes à pédoncule, comportant :
- -une ligne de convoyage (12) qui est apte à être entraînée en mouvement dans une direction longitudinale d'avancement (14),
- une pluralité de supports (16) qui sont aptes à être entraînés par la ligne de convoyage dans son mouvement d'avancement et qui sont aptes à porter chacun un objet (18),
dans lequel la ligne de convoyage (12) comprend un dispositif (12c1, 12c2) de mise en rotation d'au moins un support (16) d'un objet de manière à provoquer la rotation dudit objet autour d'un axe non horizontal et à conférer à son pédoncule une orientation géométrique prédéterminée ;
**caractérisé en ce que** le dispositif (12c1, 12c2) de mise en rotation est adapté pour maintenir cette orientation géométrique prédéterminée lors de la rotation dudit objet (18) autour d'un axe non horizontal.

7. Système selon la revendication 6, **caractérisé en ce que** chaque support (16) portant un objet comprend au moins deux parties (16a1, 16a2, 16b1, 16b2) qui sont disposées l'une à côté de l'autre suivant un agencement transversal relativement à la direction longitudinale d'avancement (14),
chaque partie (16a1, 16a2, 16b1, 16b2) étant mobile en rotation indépendamment l'une de l'autre, la ligne de convoyage comprenant deux éléments de convoyage longitudinaux (12c1, 12c2) parallèles entre eux qui sont aptes à entraîner respectivement lesdites au moins deux parties de chaque support mobile d'objet suivant des vitesses d'avancement longitudinales différentes l'une de l'autre de manière à provoquer une rotation de l'objet (18) autour d'un axe non horizontal et à conférer à son pédoncule (18a) une orientation géométrique prédéterminée.

8. Système selon la revendication 7, **caractérisé en ce que** chaque support (16) portant un objet est formé par deux éléments de support allongés (16a, 16b) disposés chacun transversalement relativement à la direction longitudinale d'avancement (14), l'un derrière l'autre et qui sont conformés conjointement pour recevoir l'objet à porter.

9. Système selon la revendication 8, **caractérisé en ce que** chaque élément de support allongé transversal (16a, 16b) comprend deux portions (16a1, 16a2, 16b1, 16b2) disposées l'une à côté de l'autre suivant l'agencement transversal dudit élément relativement à la direction longitudinale d'avancement (14), chacune des deux portions étant mobile en rotation indépendamment l'une de l'autre.

10. Système selon l'une des revendications 6 ou 7, **caractérisé en ce que** chaque élément de support allongé transversal (16a, 16b) a une forme générale de révolution autour de l'axe longitudinal dudit élément.

11. Système selon l'une des revendications 7 à 10, **caractérisé en ce que** chaque élément de convoyage longitudinal (12c1, 12c2) est choisi parmi une bande transporteuse, une chaîne, une courroie.

12. Système selon l'une des revendications 6 à 11, **caractérisé en ce qu'**il comporte un système (30) de tri sans contact des objets (18) portés par les supports (16).

13. Système selon l'une des revendications 6 à 12, **caractérisé en ce qu'**il comporte un système de transformation des objets portés par les supports.

## Patentansprüche

1. Verfahren zum Transport von Gegenständen, die zu einer Gruppe von Obst und Gemüse mit Stengel gehören, umfassen die Folgenden Schritte:
- Fördern einer Vielzahl von Gegenständen (18) auf einer Förderlinie (12) gemäß einer längs gerichteten Vorschubrichtung (14), wobei jeder geförderte Gegenstand von einer Stütze (16) getragen wird, die von der Förderlinie (12) in ihrer längs gerichteten Vorschubbewegung angetrieben wird,
- In-Drehung-Versetzen mindestens einer Stütze (16) eines Gegenstands, so dass die Drehung des Gegenstands (18) um eine nicht horizontale Achse hervorgerufen wird,
wobei das In-Drehung-Versetzen des mindestens einen Trägers (16) derart erfolgt, dass dem Stengel (18a) des Gegenstands (18) eine vorbestimmte geometrische Ausrichtung zugewiesen wird, **gekennzeichnet durch**:
Beibehalten dieser vorbestimmten geometrischen Ausrichtung bei der Drehung des Gegenstands (18) um die nicht horizontale Achse.

2. Verfahren nach Anspruch 1, **dadurch gekennzeichnet, dass** jede Stütze (16) mindestens zwei Teile (16a1, 16a2, 16b1, 16b2) umfasst, die Seite an Seite gemäß einer quer gerichteten Anordnung relativ zur längs gerichteten Vorschubrichtung angeordnet sind, und die jeweils unabhängig voneinander in Drehung beweglich sind, wobei der Schritt des In-Drehung-Versetzens des mindestens einen Trägers (16) das In-Drehung-Versetzen der mindestens zwei Teile (16a1 und 16a2, 16b1 und 16b2) mit voneinander verschiedenen Geschwindigkeiten umfasst.

3. Verfahren nach Anspruch 1 oder 2, **dadurch gekennzeichnet, dass** das In-Drehung-Versetzen des mindestens einen Trägers (16) den Stengel (18a) gemäß einer Ausrichtung ausrichtet, die im Wesentlichen quer relativ zur längs gerichteten Vorschubrichtung (14) ist.

4. Verfahren nach Anspruch 3, **dadurch gekennzeichnet, dass** es einen Schritt des In-Drehung-Versetzens der mindestens einen Stütze (16) umfasst, der mindestens während eines Schritts des Inspizierens oder des Transformierens des Gegenstands (18) erfolgt, der von der Stütze getragen wird, wobei sein Stengel (18a) ausgerichtet ist, um die Drehung des Gegenstands auf sich selbst um eine Achse hervorzurufen, wobei die im Wesentlichen quer gerichtete Ausrichtung des Stengels des Gegenstands beibehalten wird.

5. Verfahren nach einem der Ansprüche 1 bis 4, **dadurch gekennzeichnet, dass** vor dem In-Drehung-Versetzen des mindestens einen Trägers (16) des Gegenstands, der zum Ziel hat, die Drehung des Gegenstands (18) um eine nicht horizontale Achse hervorzurufen und seinem Stengel (18a) eine vorbestimmte geometrische Ausrichtung zu verleihen, das Verfahren mindestens einen vorherigen Schritt des In-Drehung-Versetzens des mindestens einen Trägers (16) umfasst, so dass die angepasste Drehung des Gegenstands, der von der Stütze getragen wird, um eine horizontale Querachse hervorgerufen wird, um dem Stengel (18a) des Gegenstands eine vorherige geometrische Ausrichtung zu verleihen.

6. System (10) zum Transport von Gegenständen, die zur Gruppe von Obst und Gemüse mit Stengel gehören, umfassend:
- einer Förderlinie (12), die ausgelegt ist, um in einer längs gerichteten Vorschubrichtung (14) in Bewegung versetzt zu werden,
- eine Vielzahl von Stützen (16), die ausgelegt sind, um durch die Förderlinie in ihrer Vorschubrichtung angetrieben zu werden, und die geeignet sind, um jeweils einen Gegenstand (18) zu tragen,
wobei die Förderlinie (12) eine Vorrichtung (12c1, 12c2) zum In-Drehung-Versetzen mindestens einen Trägers (16) eines Gegenstands umfasst, um die Drehung des Gegenstands um eine nicht horizontale Achse hervorzurufen und seinem Stengel eine vorbestimmte geometrische Ausrichtung zu verleihen;
**dadurch gekennzeichnet, dass** die Vorrichtung (12c1, 12c2) zum In-Drehung-Versetzen ausgelegt ist, um diese vorbestimmte geometrische Ausrichtung bei der Drehung des Gegenstands (18) um eine nicht horizontale Achse beizubehalten.

7. System nach Anspruch 6, **dadurch gekennzeichnet, dass** jede Stütze (16), die einen Gegenstand trägt, mindestens zwei Teile (16a1, 16a2, 16b1, 16b2) umfasst, die Seite an Seite gemäß einer Queranordnung relativ zur längs gerichteten Vorschubrichtung (14) angeordnet sind,
wobei jeder Teil (16a1, 16a2, 16b1, 16b2) unabhängig voneinander in Drehung beweglich ist, wobei die Förderlinie zwei untereinander parallele längs gerichtete Förderelemente(12c1, 12c2) umfasst, die ausgelegt sind, um jeweils die mindestens zwei Teile jeder beweglichen Gegenstandsstütze mit längs gerichteten Vorschubgeschwindigkeiten anzutreiben, die voneinander verschieden sind, um eine Drehung des Gegenstands (18) um eine nicht horizontale Achse hervorzurufen und seinem Stengel (18a) eine vorbestimmte geometrische Ausrichtung zu verleihen.

8. System nach Anspruch 7, **dadurch gekennzeichnet, dass** jede Stütze (16), die einen Gegenstand trägt, aus zwei länglichen Stützelementen (16a, 16b) gebildet ist, die jeweils quer relativ zur längs gerichteten Vorschubrichtung (14) angeordnet sind, das eine hinter dem anderen, und die gemeinsam ausgeformt sind, um den zu tragenden Gegenstand aufzunehmen.

9. System nach Anspruch 8, **dadurch gekennzeichnet, dass** jedes quer gerichtete Stützelement (16a, 16b) zwei Abschnitte (16a1, 16a2, 16b1, 16b2) umfasst, die Seite an Seite gemäß der Queranordnung des Elements relativ zur längs gerichteten Vorschubrichtung (14) angeordnet sind, wobei jeder der zwei Abschnitte unabhängig voneinander in Drehung beweglich ist.

10. System nach einem der Ansprüche 6 oder 7, **dadurch gekennzeichnet, dass** jedes quer gerichtete längliche Stützelement (16a, 16b) eine allgemeine Form der Drehung um die Längsachse des Elements aufweist.

11. System nach einem der Ansprüche 7 bis 10, **dadurch gekennzeichnet, dass** jedes längs gerichtete Förderelement (12c1, 12c2) ausgewählt ist aus einem Transportband, einer Kette und einem Riemen.

12. System nach einem der Ansprüche 6 bis 11, **dadurch gekennzeichnet, dass** es ein kontaktloses Sortiersystem (30) der Gegenstände (18) umfasst, die von den Stützen (16) getragen werden.

13. System nach einem der Ansprüche 6 bis 12, **dadurch gekennzeichnet, dass** es ein System zur Transformation der Gegenstände umfasst, die von den Stützen getragen werden.

## Claims

1. A method of transporting objects belonging to the group of fruits and vegetables with a stalk, comprising the following steps:
- conveying a plurality of objects (18) on a conveyor line (12) in a longitudinal forward direction (14), each conveyed object being carried by a support (16) that is driven by the conveyor line (12) in its longitudinal forward movement,
- rotating at least one support (16) of an object (18) in such a manner as to cause the rotation of said object (18) about a non-horizontal axis;
said at least one support (16) being rotated so as to give the stalk (18a) of said object (18) a predetermined geometric orientation, **characterized in that**
this predetermined geometric orientation is maintained during the rotation of said object (18) about the non-horizontal axis.

2. The method according to claim 1, **characterized in that** each support (16) comprises at least two parts (16a1, 16a2, 16b1, 16b2) that are disposed alongside one another in a transverse arrangement relative to the longitudinal forward direction and each of which is mobile in rotation independently of the others, the step of rotating said at least one support (16) comprising rotating said at least two parts (16a1, 16a2, 16b1, 16b2) at different speeds from one another.

3. The method according to claim 1 or 2, **characterized in that** the rotation of said at least one support (16) orients the stalk (18a) in a globally transverse orientation relative to the longitudinal forward direction (14).

4. The method according to claim 3, **characterized in that** it includes a step of rotating said at least one support (16) that is carried out at least during a step of inspection or of transformation of the object (18) carried by said support with its oriented stalk (18a), so as to cause the rotation of said object on itself about an axis, preserving the transverse overall orientation of the stalk of the object.

5. The method according to one of claims 1 to 4, **characterized in that**, prior to the rotation of said at least one object support (16) whose aim is to cause the rotation of said object (18) about a non-horizontal axis and to give its stalk (18a) a predetermined geometric orientation, the method includes at least one preliminary step of rotating said at least one support (16) so as to cause the adapted rotation of said object carried by said support about a horizontal transverse axis in order to give the stalk (18a) of the object a preliminary geometric orientation.

6. A system (10) for transporting objects belonging to the group of fruits and vegetables with a stalk, including:
- a conveyor line (12) that can be driven in movement in a longitudinal forward direction (14),
- a plurality of supports (16) that can be driven by the conveyor line in its forward movement and each of which is able to carry an object (18),
in which the conveyor line (12) comprises a device (12c1, 12c2) for rotating at least one support (16) of an object so to cause said object to rotate about a non-horizontal axis and to give its stalk a predetermined geometric orientation;
**characterized in that** the rotator device (12c1, 12c2) is adapted to maintain this predetermined geometric orientation during the rotation of said object (18) about a non-horizontal axis.

7. The system according to claim 6, **characterized in that** each support (16) carrying an object comprises at least two parts (16a1, 16a2, 16b1, 16b2) that are disposed alongside one another in a transverse arrangement relative to the longitudinal forward direction (14),
each part (16a1, 16a2, 16b1, 16b2) being mobile in rotation independently of the others, the conveyor line comprising two longitudinal conveyor elements (12c1, 12c2) parallel to each other that are respectively able to drive said at least two parts of each mobile object support at speeds of longitudinal forward movement that are different from each other so as to cause rotation of the object (18) about a non-horizontal axis and to give its stalk (18a) a predetermined geometric orientation.

8. The system according to claim 7, **characterized in that** each support (16) carrying an object is formed by two elongate support elements (16a, 16b) each disposed transversely relative to the longitudinal forward direction (14), one behind the other and conjointly conformed to receive the object to be carried.

9. The system according to claim 8, **characterized in that** each transverse elongate support element (16a, 16b) comprises two portions (16a1, 16a2, 16b1, 16b2) disposed alongside one another in the transverse arrangement of said element relative to the longitudinal forward direction (14), each of the two portions being mobile in rotation independently of one another.

10. The system according to one of claims 6 or 7, **characterized in that** each transverse elongate support element (16a, 16b) has a general shape of revolution about the longitudinal axis of said element.

11. The system according to one of claims 7 to 10, **characterized in that** each longitudinal conveyor element (12c1, 12c2) is chosen from a conveyor belt, a chain, a belt.

12. The system according to one of claims 6 to 11, **characterized in that** it includes a contactless system (30) for sorting the objects (18) carried by the supports (16).

13. The system according to one of claims 6 to 12, **characterized in that** it includes a system for transforming the objects carried by the supports.
